# EUROPEAN PATENT APPLICATION

(11) **EP 2 413 270 A1**
(43) Date of publication of application: **01.02.2012**
(21) Application number: 10171088.7
(22) Date of filing: 28.07.2010
(51) Int. Cl.: G06Q 10/00

(54) **Assigning a color to a graphical element in a MES system**

(71) Applicant: Siemens Aktiengesellschaft, 80333 München (DE)
(72) Inventor: Irace, Stefano, 17100, Savona (IT)
(74) Representative: Fischer, Michael

(57) **Abstract**

Method and system for assigning a color to a graphical element displayed in a screen of a GUI application of a MES system, wherein the graphical element represents manufacturing related information, the invention comprising the following steps: a) providing a list of colors with a given number of colors; b) assigning (A1) to the graphic element to be displayed a graphic identifying key; c) providing a color association table for assigning to each graphic identifying key a color selected from the color list; d) checking (C1) if, in the color association table, there is an association between the graphic identifying key of the graphical element to be displayed and its assigned color; otherwise, if the association is not found, assigning (A5) to the graphic identifying key a color selected from the color list and adding (A6) the newly created association to the color association table; d) displaying (A3) the graphical element with the color assigned to its graphic identifying key.

## Description

The present invention relates to a method and a system for assigning color to a graphical element in a MES system according to the preambles of claims 1 and 9 respectively.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication."

For example, the Siemens Corp. offers a broad range of MES products, under its SIMATIC® product family.

The functions that a MES system usually includes are resource allocation and status, dispatching production orders, data collection/acquisition, quality management, maintenance management, performance analysis, operations/detail scheduling, document control, labor management, process management and product tracking.

Thus, the goal of MES systems is to provide manufacturing companies with tools for measuring and controlling production activities with the aim of boosting profitability, increasing productivity, improving quality and process performance to manufacturing plants.

MES systems are provided with front-end/client GUI applications which may be used by end-users to plan and control manufacturing activities.

MES GUI applications play a key role in bringing together process, quality and business information from various sources into one unified real-time view of the production status of the plant.

MES GUI applications display to the end-user graphical screens which enable overview several parameters or scenarios of the plant activities.

Graphical screens contain information displayed via graphic objects, here in after denoted as graphic elements.

Graphical elements provide the end-users with manufacturing information, often critical for the management of manufacturing control issues.

Hence, it is desirable that graphical elements are displayed in the screens of GUI applications in a user friendly manner.

For example, in screens of GUI applications of MES systems, graphical elements may represent information of production/manufacturing related activities such as productions orders, production phases, or any type of entry related to industrial automation.

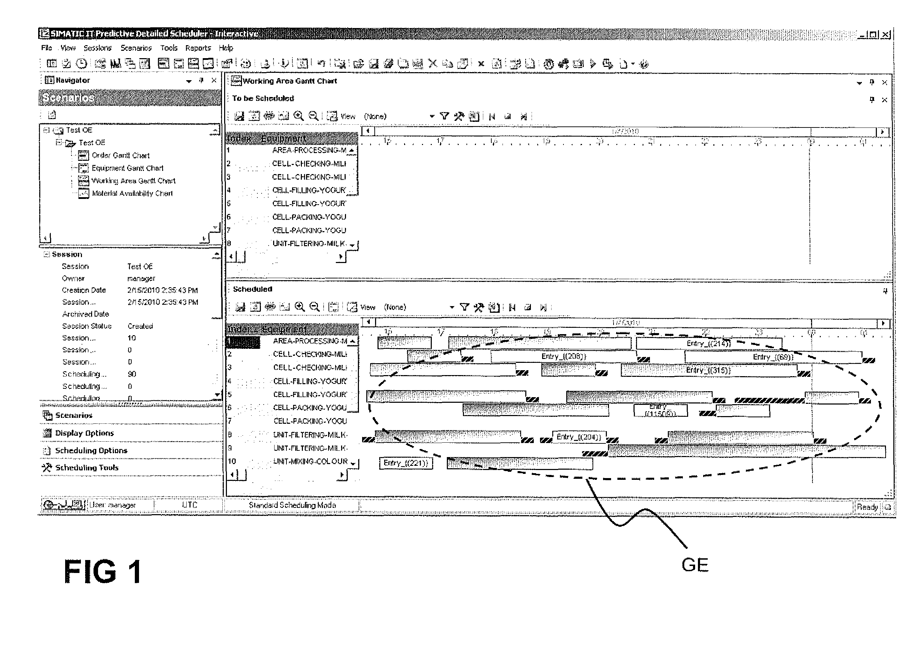

An example of displayed graphic elements GE is shown in Figure 1. Figure 1 is a snapshot taken from a sample screen of the GUI of the Predictive Detailed Scheduler-Interactive application of Simatic IT.

The Predictive Detailed Scheduler-Interactive application is the SIMATIC IT component designed to support the Detailed Production Scheduling as defined according to the ISA-95 standard, the international standard containing the guidelines for developing automated interfaces between enterprise and control systems.

The main goal of the Predictive Detailed Scheduler-Interactive application is to create an executable and optimized detailed production schedule in order to drive and synchronize the majority of MES activities, such as, for example, setup activities, maintenance activities, material preparation, inventory movements.

For example, the Predictive Detailed Scheduler-Interactive application may prove useful for a plant manager who needs to simultaneously schedule activities in all the production areas or for several area managers who need to independently schedule their own production area.

In Figure 1, the graphical elements GE are shown in the right lower part of the screen snapshot and are plotted over a time axis. The displayed graphical elements GE are entries representing information of production phases such as processing, checking, filling, packing and mixing.

It is noted that the several entry graphical elements GE shown Figure 1 are displayed in the original screen in a color mode.

In fact, MES applications are often required to display graphical elements in a colored way.

This proves very useful to highlight at glance several different production related information in order to control MES activities in a user friendly manner.

Unfortunately, state of the art methods for assigning colors to graphical elements in GUI applications of MES systems have the drawback that they rely on a random generation of RGB values.

In addition, the colors of the graphical elements generated with such methods have often the disadvantage of not being easily distinguishable one from the other by human eyes.

Moreover, state of the art methods for assigning colors to graphical elements in MES GUI applications have the drawback they do not allow end-users to customize their own color choice or strategy.

It is therefore aim of the present invention to overcome the above mentioned drawbacks, by providing a method and a system for assigning a color to a graphical element in a GUI screen of a MES system which renders user friendlier the overview of manufacturing related information.

The aforementioned aim is achieved by a method and a system for assigning a color to a graphical element displayed in a screen of a GUI application of a MES system, wherein the graphical element represents manufacturing related information,
the invention comprising:
a) providing a list of colors with a given number of colors;
b) assigning to the graphic element to be displayed a graphic identifying key;
c) providing a color association table for assigning to each graphic identifying key a color selected from the color list;
d) checking if, in the color association table, there is an association between the graphic identifying key of the graphical element to be displayed and its assigned color; otherwise, if the association is not found, assigning to the graphic identifying key a color selected from the color list and adding the newly created association to the color association table;
e) displaying the graphical element with the color assigned to its graphic identifying key.

In invention embodiments, item a) may further advantageously comprise the grouping of one or more graphical elements in one or more color groups; and in item b), graphic elements belonging to the same color group may be conveniently assigned with the same graphic identifying key.

In invention embodiments, the graphical element grouping may preferably be performed according to a given color strategy and each given color strategy may conveniently have its own color association table.

In invention embodiments, the given color strategy may advantageously be selected from the group consisting of:
- status strategy, in which graphical elements are grouped according to their production status;
- material strategy, in which graphical elements are grouped according to the material they represent;
- order strategy, in which graphical elements are grouped according to the order they represent;
- production phase strategy, in which graphical elements are grouped according to the production phase they represent;
- custom information strategy, in which graphical elements are grouped according to the custom entry information they represent.

In invention embodiments, the color association table may conveniently be stored in a repository.

In invention embodiments, item c) may preferably be selected from the group consisting of:
- providing the color association table by restoring the table previously stored in the repository;
- providing the color association table by restoring the table previously stored in the repository according to the given color strategy;
- providing the color association table by creating a void table;
- providing the color association by loading a default color association table;
- providing the color association by loading the default color association table for the given color strategy.

In invention embodiments, the provided color association table may conveniently be customized by creating, editing or deleting at least one association between a given graphic identifying key and a given color from the color list.

In invention embodiments, a color usage counter may preferably keep track of the usage of each color of the color list for displaying graphic elements having different graphic identification keys.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

With invention embodiments, the capability of using different color strategies for different manufacturing related information enables end-user to have an easier to understand glance of the GUI screen.

With invention embodiments, specific properties of given graphic elements can be highlighted with given colors.

With invention embodiments, given graphical elements can be assigned with a permanent color, which can also be customized.

With invention embodiments, a consistent coloration schema is enabled among several working sessions even when the MES GUI application is closed and restarted several times.

### Brief description of the drawings

The invention will now be described in preferred but not exclusive embodiments with reference to the accompanying drawings, wherein:
- Figure 1: is a snapshot taken from a sample screen of the GUI of the Predictive Detailed Scheduler-Interactive application of Simatic IT (Prior Art, previously described);
- Figure 2: is a flow chart schematically illustrating steps for assigning color to a graphical element according to an example embodiment of the present invention.

### Detailed description

According to the proposed invention, a graphical element in a screen of a GUI application of a MES system is display with its assigned color.

Firstly, a list of colors, herein denoted also as color palette, is provided with a given number of colors.

The colors of the color palette may preferably be selected from a list of recognizable colors by the human eye.

The choice of the given number of colors has an impact on the capability of the human eye to recognize the different colors to be displayed. The lower the number of recognizable colors of the color palette, the more are distinguishable the colors from each other. However, the higher the number of the colors of the color palette, the higher the amount of manufacturing related information that can be represented via colors.

Different number of colors in the color palette may be conveniently chosen for different color strategies. For example, when the color strategy is a status strategy, e.g. "delayed status", "on time" status or "to-be-scheduled-status", the color number may automatically be assigned to three, e.g. red, green and yellow.

Each graphic element to be displayed is assigned with a graphic identifying key.

Advantageously, in invention embodiments, two or more graphic elements may be grouped together in a color group and thus may be assigned with the same graphic identifying key.

A color association table is provided. The color association table provides, for each graphic identifying key, an association to a color selected from the color palette.

A check is performed to verify if, in the color association table, there is an association between the graphic identifying key of the graphical element to be displayed and its assigned color. Otherwise, if the association is not found, a color selected from the color palette is assigned to the graphic identifying key and this newly created association is added to the color association table. In invention embodiments, via usage counters colors my be assigned in a uniform manner, preventing that some colors are used much more than others for different graphic identifying keys.

The graphical element is displayed with the color assigned to its graphic identifying key.

As above mentioned, in invention embodiments, two or more graphic elements may be grouped together in a color group, having the same graphic identifying key.

The configuration of a color group may reflect the strategy choice of the end-user who may wish to have certain graphical elements displayed with the same color.

According to a first example embodiment, a color strategy configuration may group, with the same graphic identifying key, graphical elements having the same status, e.g. delayed, on time or to-be-scheduled status.

According to a second example embodiment, a color strategy configuration may group, with the same graphic identifying key, graphical elements representing the same material.

According to a third example embodiment, a color strategy configuration may group, with the same graphic identifying key, graphical elements representing the same order.

According to a forth example embodiment, a color strategy configuration may group, with the same graphic identifying key, graphical elements representing the same the production phase.

According to a fifth example embodiment, a color strategy configuration may group, with the same graphic identifying key, graphical elements representing the same custom entry information.

In invention embodiments, each configurable color strategy may have its own color association table.

Moreover, in invention embodiments, the color association table may be stored in a repository so that color choice persistence is advantageously provided. Then, at start-up of the MES GUI application, on ore more saved color association tables may be restored.

In addition, in invention embodiment, the end-user may be provided with the capability of configuring her/his own custom color associations. The color association table may advantageously be represented as an interactive and configurable legend.

Such custom color associations may comprise insertion, deletion or modification of one or more associations of the color association table. Also in this case, the color association table with its custom associations may be saved and loaded at start-up.

Thus, advantageously, such custom configuration may provide the capability to override automatic color assignment. For example, the user may wish to have the production phase "painting" always displayed with the green color.

The color association table may be a void table and its color associations may be automatically assigned via the proposed invention. Alternatively or according to the desired configuration, the color association table may be a restored color association table which was previously stored in a repository or a default color association table.

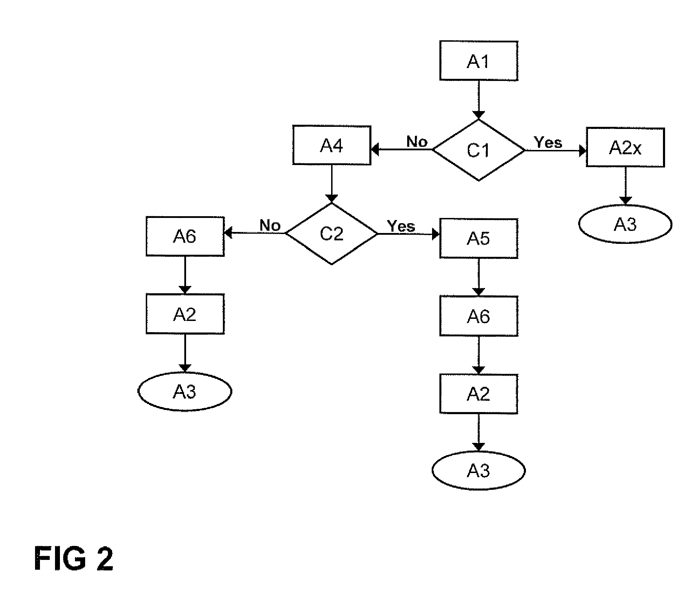

Figure 2 is a flow chart schematically illustrating steps for assigning color to a graphical element according to an example embodiment of the present invention.

The illustrated exemplary flow chart is executed when a GUI application is required to draw a graphical element and the given color strategy is already selected. For example, the color strategy may be color graphical elements according to operations by production order or by material produced.

Before the step A1 is executed, the color palette is loaded as well as a color association table with eventual customizations. The color association table may be a void one, one already saved in a repository or one modified in a custom way by the end-user.

For each color of the color palette, a color usage counter is calculated while displaying colors associated to different graphic identifying keys, according to the selected color association table. For example, a color from the color palette which has never been used is assigned with a color usage counter of zero and most used colors, for different graphic identifying keys, have the highest usage counter.

At step A1, a graphic element having its key value pair as for example "NAME: VALUE" is associated to a graphic identifying key as for example a string identifier.

At conditional check C1, it is checked whether the graphic identifying key of the graphic element is already associated to a color from the color palette.
If yes, at step A2x, if the color is used for the first time for this graphic identifying key, the related color usage counter is increased. At step A3, the GUI application displays the graphical element with its associated color.

Otherwise, if no association is found, at step A4, a new association between the graphic identifying key and a color from the color palette is created for example using the Object Key hash code.

At conditional check C2, it is checked whether the color is a most used color.
If not, at step A6, the newly created color association is stored in the color association table. Then, at step A2, the color related usage counter is increased. Then, at step A3, the GUI application displays the graphical element with its associated color.
Otherwise, if the color is a most used color, at step A5, a less used color is selected from the color palette using the information contained in the usage counters. Then, at step A6, the newly created color association is stored in the color association table. Then, at step A2, the color related usage counter is increased. Then, at step A3, the GUI application displays the graphical element with its associated color.

It is noted that if the number of graphical identifying keys is less or equal to the number of colors contained in the color palette, then each color is used only once otherwise, by checking that most used colors are not used via usage counters, color usage is smeared for different graphic identifying keys in an uniform manner, advantageously avoiding random usage of certain colors.

### List of used acronyms

- ERP: Enterprise Resource Planning
- GUI: Graphical User Interface
- IT: Information Technology
- MES: Manufacturing Execution System

## Claims

1. A method for assigning a color to a graphical element displayed in a screen of a GUI application of a MES system, wherein the graphical element represents manufacturing related information,
the method comprising the following steps:
a) providing a list of colors with a given number of colors;
b) assigning (A1) to the graphic element to be displayed a graphic identifying key;
c) providing a color association table for assigning to each graphic identifying key a color selected from the color list;
d) checking (C1) if, in the color association table, there is an association between the graphic identifying key of the graphical element to be displayed and its assigned color; otherwise, if the association is not found, assigning (A5) to the graphic identifying key a color selected from the color list and adding (A6) the newly created association to the color association table;
e) displaying (A3) the graphical element with the color assigned to its graphic identifying key.

2. The method of claim 1,
- wherein step a) further comprises the sub-step of grouping one or more graphical elements in one or more color groups;
- wherein in step b), graphic elements belonging to the same color group are assigned with the same graphic identifying key.

3. The method of claim 2, the sub-step of graphical element grouping is performed according to a given color strategy and wherein each given color strategy has its own color association table.

4. The method of claim 3, the given color strategy is selected from the group consisting of:
- status strategy, in which graphical elements are grouped according to their production status;
- material strategy, in which graphical elements are grouped according to the material they represent;
- order strategy, in which graphical elements are grouped according to the order they represent;
- production phase strategy, in which graphical elements are grouped according to the production phase they represent;
- custom information strategy, in which graphical elements are grouped according to the custom entry information they represent.

5. The method of any of the previous claims, further providing the step of:
f) storing the color association table in a repository.

6. The method of any of the previous claims, wherein step c) is selected from the group consisting of:
- providing the color association table by restoring the table previously stored in the repository;
- providing the color association table by restoring the table previously stored in the repository according to the given color strategy;
- providing the color association table by creating a void table;
- providing the color association by loading a default color association table;
- providing the color association by loading the default color association table for the given color strategy.

7. The method of any of the previous claims, wherein the provided color association table is customized by creating, editing or deleting at least one association between a given graphic identifying key and a given color from the color list.

8. The method of any of the previous claims, wherein a color usage counter keeps track of the usage (A2, A2x) of each color of the color list for displaying graphic elements having different graphic identification keys.

9. A system having means for performing the steps of the method according to any of the claims 1 to 8.

10. The method of any of the claims 1 to 8 **characterized in that** it is implemented in software.
